# EUROPEAN PATENT APPLICATION

(11) **EP 4 693 851 A1**
(43) Date of publication of application: **11.02.2026**
(21) Application number: 24795544.6
(22) Date of filing: 19.02.2024
(51) Int. Cl.: H02K 21/22, H02K 16/04

(54) **AXIAL FIELD MOTOR**

(30) Priority: 26.04.2023 CN 202310463175
(71) Applicant: Wuxi InfiMotion Propulsion Technology Co., Ltd., Wuxi, Jiangsu 214181 (CN)
(72) Inventor: ZHANG, Shengchuan, Wuxi, Jiangsu 214181 (CN); HAN, Rui, Wuxi, Jiangsu 214181 (CN); XIONG, Xuebo, Wuxi, Jiangsu 214181 (CN); ZONG, Zhaoke, Wuxi, Jiangsu 214181 (CN); FANG, Liang, Wuxi, Jiangsu 214181 (CN); YU, Haisheng, Wuxi, Jiangsu 214181 (CN); LIN, Xiaozhe, Wuxi, Jiangsu 214181 (CN)
(74) Representative: Michalski Hüttermann & Partner Patentanwälte mbB
(86) International application number: PCT/CN2024/077591
(87) International publication number: WO 2024/222156

(57) **Abstract**

The present disclosure provides an axial field motor. The axial field motor includes a stator assembly (10) and rotor assemblies (20) located at two ends of the stator assembly (10), where the stator assembly (10) includes a stator frame (11) and a plurality of stator cores (12), the stator frame (11) includes a bearing seat (111) and a plurality of spokes (113) arranged on the bearing seat (111) at intervals, each of the spokes (113) includes a pair of main surfaces (1133) arranged opposite to each other and a plurality of side edges (1134) connecting the pair of main surfaces (1133), the main surfaces (1133) are perpendicular to an axis of the axial field motor, and the stator cores (12) are fixed between the plurality of spokes (113).

## Description

### TECHNICAL FIELD

The present disclosure relates to the field of electric motor technologies, and in particular to an axial field motor.

### BACKGROUND

With the rapid development of new energy vehicles, electric motor systems, as key driving systems of new energy vehicles, have entered a period of rapid growth. Axial field motors, with their high torque density, high efficiency, good heat dissipation performance, compact axial dimension, and numerous other advantages, are gradually becoming a research hotspot in the field of electric motors.

### SUMMARY

The present disclosure provides an axial field motor, which can simplify positioning of stator cores.

The present disclosure provides an axial field motor, including a stator assembly and rotor assemblies located at two ends of the stator assembly, where the stator assembly includes a stator frame and a plurality of stator cores, the stator frame includes a bearing seat and a plurality of spokes arranged on the bearing seat at intervals, each of the plurality of spokes includes a pair of main surfaces arranged opposite to each other and a plurality of side edges connecting the pair of main surfaces, the pair of main surfaces are perpendicular to an axis of the axial field motor, and each of the plurality of stator cores is fixed between corresponding spokes among the plurality of spokes.

Further, for each of the plurality of stator cores, positioning slots are provided on two side surfaces of the stator core and matched with the corresponding spokes, and part of the side edges of the corresponding spokes are accommodated in the positioning slots; and the positioning slots are located in the middle of the two side surfaces of the stator core. Further, each of the plurality of spokes includes a front section disposed close to the bearing seat and a rear section further extending from the front section, and a width of the front section is greater than a width of the rear section.

Further, for each of the plurality of stator cores, the stator core is of a structure with a pole piece on one side, one end of the stator core is a pole piece end, the other end of the stator core is a non-pole-piece end, and an area of the pole piece end is greater than an area of the non-pole-piece end.

Further, the plurality of stator cores include a first group of stator cores and a second group of stator cores alternately arranged on the stator frame, the pole piece ends of the first group of stator cores are orientated towards one end of the stator assembly, and the pole piece ends of the second group of stator cores are orientated towards the other end of the stator assembly.

Further, a width of the pole piece end of each of the plurality of stator cores in a circumferential direction is greater than a distance between adjacent two of the plurality of spokes in the circumferential direction; a slot opening is formed between the pole piece end of each of the plurality of stator cores and the non-pole-piece end of each of adjacent two of the plurality of stator cores; and a plurality of slot openings of the stator assembly are of the same size and are uniformly distributed.

Further, the axial field motor further includes a housing, one end of the plurality of spokes is fixed to the bearing seat, and the other end of the plurality of spokes is fixed to the housing; the stator frame includes a connecting portion connected to the other end of the plurality of spokes, and the connecting portion is mounted on an inner side of the housing.

Further, a coolant channel is provided inside the housing, and a water port is provided on the housing.

Further, sealing plates are fixed at the two ends of the stator assembly, the sealing plates abut against the plurality of stator cores, stator slots are formed between adjacent stator cores among the plurality of stator cores, oil baffles are provided in the stator slots, and the plurality of stator cores, the sealing plates, and the oil baffles form an oil guide circuit.

Further, the stator frame includes an annular sleeve disposed around the bearing seat, and the plurality of spokes are uniformly arranged on the annular sleeve.

Further, a steel sleeve is embedded inside the bearing seat, and the annular sleeve and the plurality of spokes are made of polymer resin materials.

Further, each of the rotor assemblies includes a magnetic guide disk and a plurality of permanent magnets arranged on the magnetic guide disk, outer cylindrical surfaces of the plurality of permanent magnets are flush with an outer cylindrical surface of the magnetic guide disk; the outer cylindrical surface of the magnetic guide disk and the outer cylindrical surfaces of the plurality of permanent magnets are covered with a carbon fiber sleeve, and the carbon fiber sleeve is formed by winding carbon fiber.

Further, the stator frame and the plurality of stator cores are fixed integrally by epoxy potting.

Further, each of the plurality of stator cores is formed by molding a soft magnetic composite material, by winding an amorphous steel ribbon, or by laminating silicon steel sheets.

With the present disclosure, the spokes are disposed on the stator frame, so that the stator cores can be positioned by using the spokes. Each stator core is positioned between two spokes in a simple manner. Meanwhile, the spokes can withstand torques and tangential forces transmitted from the stator cores, thereby increasing the rigidity.

It is to be understood that both the foregoing general description and the following detailed description are exemplary and explanatory only, and are not intended to limit the present disclosure.

### BRIEF DESCRIPTION OF DRAWINGS

The drawings herein, which are incorporated into and constitute a part of this specification, illustrate embodiments consistent with the present disclosure, and are used in conjunction with the specification to explain the principles of the present disclosure.
FIG. 1 is a cross-sectional view of an axial field motor according to the present disclosure.
FIG. 2 is a cross-sectional view of a stator assembly of FIG. 1 assembled to a housing.
FIG. 3 is a front view of a stator frame of FIG. 1 assembled to a housing.
FIG. 4 is a perspective view of a stator core of FIG. 1.
FIG. 5 is a front view of a stator assembly of FIG. 2 assembled to a housing.

Description of reference numerals: 10-stator assembly; 101-first positioning space; 102-second positioning space; 11-stator frame; 111-bearing seat; 1111-body portion; 1112-end portion; 112-annular sleeve; 113-spoke; 1131-front section; 1132-rear section; 1133-main surface; 1134-side edge; 114-connecting portion; 12-stator core; 120-tooth portion; 121-pole piece end; 122-non-pole-piece end; 123-side surface; 124-top surface; 125-bottom surface; 126-positioning slot; 127-slot opening; 128-stator slot; 20-rotor assembly; 201-first air gap; 202-second air gap; 21-magnetic guide disk; 22-permanent magnet; 23-carbon fiber sleeve; 30-housing; 31-water port.

### DETAILED DESCRIPTION

Reference will now be made in detail to exemplary embodiments, examples of which are illustrated in the accompanying drawings. When the following description refers to the drawings, the same reference numerals in different drawings indicate the same or similar elements, unless otherwise specified. Implementations set forth in the following exemplary embodiments do not represent all implementations consistent with the present disclosure. Instead, they are merely examples of apparatuses and methods consistent with some aspects of the present disclosure as detailed in the appended claims.

Terminology used herein is for the purpose of describing particular embodiments only, and is not intended to be limiting of the present disclosure. The singular forms "a", "said" and "the" used in this specification and the appended claims are also intended to include plural forms, unless the context clearly indicates otherwise. It should also be understood that the term "and/or" as used herein refers to and encompasses any or all possible combinations of one or more of the associated listed items.

It should be understood that although the terms first, second, third, etc. may be used in the present disclosure to describe various information, the information should not be limited to these terms. These terms are only used to distinguish the same type of information from each other. For example, without departing from the scope of the present disclosure, first information may also be referred to as second information, and similarly, second information may also be referred to as first information. Depending on the context, the word "if" as used herein may be interpreted as "upon" or "when" or "in response to determining".

YASA Corporation has invented a dual-rotor axial field motor without a stator yoke, which has the advantages such as high efficiency, light weight, and ease of machining. However, since the stator yoke is eliminated and stator cores are arranged separately from each other, it is difficult to position the stator cores.

In view of this, embodiments of the present disclosure provide an axial field motor. Hereinafter, the embodiments of the present disclosure will be described in detail.

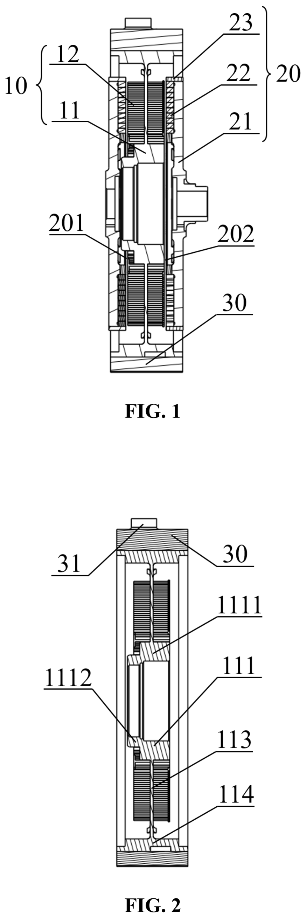

As shown in FIG. 1, the axial field motor according to the present disclosure includes a stator assembly 10, rotor assemblies 20, and a housing 30. The stator assembly 10 includes a stator frame 11 and a plurality of stator cores 12.

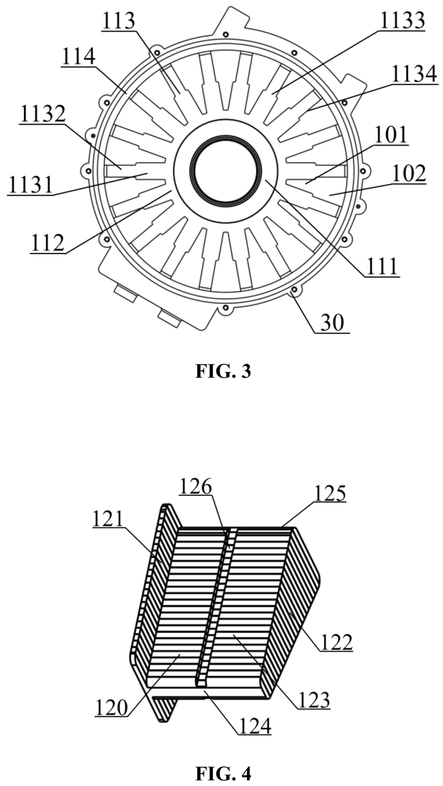

Referring to FIGS. 2 and 3, the stator frame 11 includes a bearing seat 111, an annular sleeve 112, a spoke 113, and a connecting portion 114. The stator frame 11 can be integrally formed, and may include any material that is non-magnetic, non-conductive, and has a certain strength, for example, a polymer resin material, which can reduce the weight of the axial field motor. The stator frame 11 may be of a split structure, and the annular sleeve 112, the spoke 113, and the connecting portion 114 may also include the polymer resin material. A steel sleeve is embedded inside the bearing seat 111, and a bearing is provided inside the steel sleeve. Since the thermal deformation of the steel sleeve is small, an overall thermal deformation of the stator assembly 10 can be reduced.

The bearing seat 111 has a stepped cylindrical shape, and includes a body portion 1111 and an end portion 1112 arranged coaxially. An inner diameter of the body portion 1111 is greater than an inner diameter of the end portion 1112, and an outer diameter of the body portion 1111 is greater than an outer diameter of the end portion 1112. In this way, steps are formed inside and outside the bearing seat 111, which can be used to limit movement of the bearing and other components assembled to the bearing seat 111. The annular sleeve 112 is a thin sheet and is disposed around the body portion 1111.

The spoke 113 is disposed on the bearing seat 111, with one end fixed to the bearing seat 111 and the other end fixed to the housing 30. In this embodiment, a plurality of spokes 113 are uniformly arranged on the annular sleeve 112 in a circumferential direction, which can enhance the connection strength between the spokes 113 and the bearing seat 111. In other embodiments, the annular sleeve 112 may be omitted, and the spokes 113 are formed by directly extending radially from the bearing seat 111.

Each of the spokes 113 has a long strip shape, and includes a pair of main surfaces 1133 arranged opposite to each other and a plurality of side edges 1134 connecting the pair of main surfaces 1133, where the main surfaces 1133 are perpendicular to an axis of the axial field motor. The plurality of spokes 113 are circumferentially arranged in a plane perpendicular to the axis of the axial field motor, and are flush with each other. The plane is located at a middle position between two end faces of the axial field motor. The main surfaces 1133 on a same side of the spokes 113 are also flush with each other.

One end of each spoke 113 is connected to the annular sleeve 112 and extends in a radial direction of the bearing seat 111. Each stator core 12 is secured between corresponding spokes 113. During assembly, each stator core 12 abuts against two adjacent spokes 113 to complete positioning, which is easy to operate. Moreover, the spokes 113 can withstand torques and tangential forces transmitted from the stator cores 12 to increase the rigidity.

Each spoke 113 includes a front section 1131 disposed close to the bearing seat 111 and a rear section 1132 further extending from the front section 1131. A first positioning space 101 is formed between adjacent front sections 1131, and a second positioning space 102 is formed between adjacent rear sections 1132. A width of the front section 1131 is greater than a width of the rear section 1132, and the first positioning space 101 is smaller than the second positioning space 102, so as to adapt to a shape of the stator core 12.

The connecting portion 114 has a cylindrical shape and is connected to the other end of each spoke 113. The connecting portion 114 is mounted on an inner side of the housing 30 and is in interference fit with the housing 30 to fix the stator frame 11 to the housing 30.

In other embodiments, the connecting portion 114 can be fixed to the housing 30 by fasteners such as bolts, or by protrusions and recesses matched with each other, or by welding. The connecting portion 114 may also be omitted, and the spokes 113 are directly connected to the housing 30 for fixing. The stator frame 11 may also be integrally die-cast with the housing 30.

As shown in FIG. 4, the stator core 12 has a quadrangular prism shape, which is of a structure with a pole piece on one side. The stator core 12 includes a tooth portion 120, with a pole piece end 121 and a non-pole-piece end 122 located at two ends of the tooth portion 120. The tooth portion 120 includes a pair of side surfaces 123, a top surface 124, and a bottom surface 125.

Positioning slots 126 are provided on two side surfaces 123 of the stator core 12, and are assembled to corresponding spokes 113. The positioning slots 126 are arranged in the plane perpendicular to the axis of the axial field motor, and a pair of side edges 1134 of the spoke 113 are accommodated in corresponding positioning slots 126. The positioning slots 126 extend from the top surface 124 to the bottom surface 125. The positioning slots 126 are located in the middle of the two side surfaces 123 of the stator core 12, providing a good fixing effect. Through cooperation of the positioning slot 126 and the spoke 113, the stator core 12 can be quickly positioned and mounted.

End surfaces of the tooth portion 120, the pole piece end 121, and the non-pole-piece end 122 are all trapezoidal. An area of the pole piece end 121 is greater than an area of the non-pole-piece end 122. Both sides of the pole piece end 121 extend beyond the non-pole-piece end 122. The positioning slots 126 are located between the pole piece end 121 and the non-pole-piece end 122. After the stator cores 12 and the stator frame 11 are assembled, the pole piece end 121 and the non-pole-piece end 12 are respectively located on two sides of the plane formed by the spokes 113.

Arrangement of the non-pole-piece end 122 improves the assembly efficiency of the stator core 12. During assembly, the stator core 12 passes between two adjacent spokes 113 from a position close to the housing 30, and the non-pole-piece end 122 may pass through the first positioning space 101 and the second positioning space 102. After passing through the spokes 113, the stator core 12 moves radially towards the axis, so that the positioning slots 126 on two sides of the stator core 12 engage with the side edges 1134, and the tooth portion 120 abuts against the two adjacent spokes 113. A stator winding (not shown) may be mounted to the stator core 12 through the non-pole-piece end 122. An insulating bushing (not shown) is provided between the stator winding and the stator core 12, and the insulating bushing is positioned to avoid the positioning slot 126.

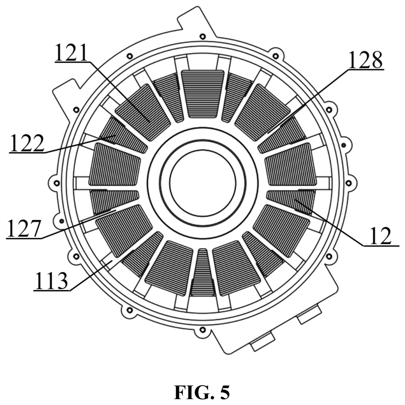

As shown in FIG. 5, the plurality of stator cores 12 include a first group of stator cores and a second group of stator cores alternately arranged on the stator frame 11. The pole piece ends 121 of the first group of stator cores are orientated towards one end of the stator assembly 10, and the pole piece ends 121 of the second group of stator cores are orientated towards the other end of the stator assembly 10.

A slot opening 127 is formed between the pole piece end 121 of the stator core 12 and the non-pole-piece end 122 of each of two adjacent stator cores 12. A plurality of slot openings 127 of the stator assembly 10 are of the same size and uniformly distributed. A width of the pole piece end 121 of the stator core 12 in a circumferential direction is greater than a distance between two adjacent spokes 113 in the circumferential direction. From an axial perspective, the pole piece end 121 of the stator core 12 overlaps two adjacent spokes 113 and the annular sleeve 112. A width of the slot opening 127 is reduced such that the width of the slot opening 127 is less than a width of the spoke 113. The slot opening 127 also overlaps the spoke 113. An alternating arrangement of the stator cores 12 makes the slot openings 127 uniformly distributed and have a smaller width, which reduces a torque ripple of the axial field motor while realizing smooth assembly of the stator windings.

The stator frame 11 and the stator cores 12 are fixed integrally by epoxy potting. On the one hand, the fixing strength of the stator cores 12 can be enhanced. On the other hand, the stiffness of the stator assembly 10 can be improved, a vibration noise can be reduced, and a NVH effect can be improved. At the same time, the poured epoxy has a high thermal conductivity, which can accelerate the cooling rates of the stator cores and the stator windings, improve a power of the motor, increase a power density, and enhance a continuous operation capability of the motor.

The stator core 12 can be formed by directly molding a soft magnetic composite material, with a simple manufacturing process and a high production efficiency. The soft magnetic composite material has a high electrical resistivity, which results in low eddy current losses. At frequencies above 400 Hz, a specific loss of the soft magnetic composite material is relatively low. The stator core 12 may also be formed by winding an amorphous steel ribbon, or by laminating silicon steel sheets.

The rotor assemblies 20 are located at two ends of the stator assembly 10, and a first air gap 201 and a second air gap 202 are formed between the rotor assemblies 20 and the stator assembly 10. Each of the rotor assemblies 20 includes a magnetic guide disk 21 and a plurality of permanent magnets 22 disposed on the magnetic guide disk 21. N poles and S poles of the permanent magnets 22 on the rotor assemblies 20 at the two ends of the stator assembly 10 are disposed opposite to each other.

A magnetic flux starts from the N pole of the rotor assembly 20 at one end of the stator assembly 10, passes through the first air gap 201, the tooth portion 120 of the stator core 12, and the second air gap 202 to enter the S pole of the rotor assembly 20 at the other end of the stator assembly 10. The magnetic flux then enters the adjacent N pole through the magnetic guide disk 21, starts from the adjacent N pole, passes through the second air gap 202, the tooth portion 120 of the stator core 12, and the first air gap 201 to return to the S pole of the rotor assembly 20 at the starting end, forming a closed magnetic circuit.

The magnetic guide disk 21 is annular, and the permanent magnet 22 is in a shape of an annular sector. The permanent magnet 22 is positioned to the magnetic guide disk 21 through a shallow slot and is fixed by an adhesive such as glue or plastic potting. An outer cylindrical surface of the permanent magnet 22 is flush with an outer cylindrical surface of the magnetic guide disk 21.

The outer cylindrical surface of the magnetic guide disk 21 and outer cylindrical surfaces of the permanent magnets 22 are covered with a carbon fiber sleeve 23. The carbon fiber sleeve 23 is formed by winding high-strength carbon fibers. A width of the carbon fiber sleeve 23 in an axial direction is the same as a sum of thicknesses of the magnetic guide disk 21 and the permanent magnet 22 in the axial direction, so that the magnetic guide disk 21 and the permanent magnet 22 can be wrapped in the carbon fiber sleeve 23. By providing the carbon fiber sleeve 23, the centrifugal stress generated when the rotor operates at high rotational speeds can be overcome, and the operation of the axial field motor at high rotational speeds can be realized.

The axial field motor according to the present disclosure can be cooled by water cooling or oil cooling. When water cooling is used, a coolant channel (not shown) is provided inside the housing 30, and a water port 31 is provided on the housing 30.

When oil cooling is used, sealing plates (not shown) are fixed at the two ends of the stator assembly 10, and the sealing plates abut against the stator cores 12. Stator slots 128 are formed between adjacent stator cores 12, and oil baffles (not shown) are provided in the stator slots 128. The stator cores 12, the sealing plates, and the oil baffles form an oil guide circuit to realize oil immersion cooling of the stator cores 12 and the stator windings. A material of the sealing plate may be any non-magnetic and non-conductive material, such as glass fiber.

The foregoing are merely some implementations of the present disclosure, and are not intended to limit the present disclosure in any form. Although the present disclosure has been disclosed above in some embodiments, these embodiments are not intended to limit the present disclosure. Any person skilled in the art can, without departing from the scope of the technical solutions of the present disclosure, make some changes or modifications to equivalent embodiments by using the technical content disclosed above. However, any simple modifications, equivalent changes and modifications made to the above embodiments according to the technical essence of the present disclosure without departing from the content of the technical solutions of the present disclosure still fall within the scope of the technical solutions of the present disclosure.

## Claims

1. An axial field motor, comprising:
a stator assembly; and
rotor assemblies located at two ends of the stator assembly; wherein
the stator assembly comprises a stator frame and a plurality of stator cores,
the stator frame comprises a bearing seat and a plurality of spokes arranged on the bearing seat at intervals,
each of the plurality of spokes comprises a pair of main surfaces arranged opposite to each other and a plurality of side edges connecting the pair of main surfaces,
the pair of main surfaces are perpendicular to an axis of the axial field motor, and
each of the plurality of stator cores is fixed between corresponding spokes among the plurality of spokes.

2. The axial field motor according to claim 1, wherein
for each of the plurality of stator cores,
positioning slots are provided on two side surfaces of the stator core and matched with the corresponding spokes, and part of the side edges of the corresponding spokes are accommodated in the positioning slots, and
the positioning slots are located in the middle of the two side surfaces of the stator core.

3. The axial field motor according to claim 1, wherein each of the plurality of spokes comprises a front section disposed close to the bearing seat and a rear section further extending from the front section, and a width of the front section is greater than a width of the rear section.

4. The axial field motor according to claim 1, wherein
for each of the plurality of stator cores,
the stator core is of a structure with a pole piece on one side,
one end of the stator core is a pole piece end, and the other end of the stator core is a non-pole-piece end, and
an area of the pole piece end is greater than an area of the non-pole-piece end.

5. The axial field motor according to claim 4, wherein
the plurality of stator cores comprise a first group of stator cores and a second group of stator cores alternately arranged on the stator frame,
pole piece ends of the first group of stator cores are orientated towards one end of the stator assembly, and
pole piece ends of the second group of stator cores are orientated towards the other end of the stator assembly.

6. The axial field motor according to claim 4, wherein
a width of the pole piece end of each of the plurality of stator cores in a circumferential direction is greater than a distance between adjacent two of the plurality of spokes in the circumferential direction,
a slot opening is formed between the pole piece end of each of the plurality of stator cores and the non-pole-piece end of each of adjacent two of the plurality of stator cores, and
a plurality of slot openings of the stator assembly are of same size and are uniformly distributed.

7. The axial field motor according to claim 1, further comprising a housing,
wherein one end of the plurality of spokes is fixed to the bearing seat, and the other end of the plurality of spokes is fixed to the housing, and
the stator frame comprises a connecting portion connected to the other end of the plurality of spokes and mounted on an inner side of the housing.

8. The axial field motor according to claim 7, wherein a coolant channel is provided inside the housing, and a water port is provided on the housing.

9. The axial field motor according to claim 7, wherein
sealing plates are fixed at the two ends of the stator assembly, and the sealing plates abut against the plurality of stator cores,
stator slots are formed between adjacent stator cores among the plurality of stator cores, and oil baffles are provided in the stator slots, and
the plurality of stator cores, the sealing plates, and the oil baffles form an oil guide circuit.

10. The axial field motor according to claim 1, wherein the stator frame comprises an annular sleeve disposed around the bearing seat, and the plurality of spokes are uniformly arranged on the annular sleeve.

11. The axial field motor according to claim 10, wherein a steel sleeve is embedded inside the bearing seat, and the annular sleeve and the plurality of spokes are made of polymer resin materials.

12. The axial field motor according to claim 1, wherein
each of the rotor assemblies comprises a magnetic guide disk and a plurality of permanent magnets arranged on the magnetic guide disk, outer cylindrical surfaces of the plurality of permanent magnets being flush with an outer cylindrical surface of the magnetic guide disk, and
the outer cylindrical surface of the magnetic guide disk and the outer cylindrical surfaces of the plurality of permanent magnets are covered with a carbon fiber sleeve, and the carbon fiber sleeve is formed by winding carbon fibers.

13. The axial field motor according to claim 1, wherein the stator frame and the plurality of stator cores are fixed integrally by epoxy potting.

14. The axial field motor according to claim 1, wherein each of the plurality of stator cores is formed by molding a soft magnetic composite material, is formed by winding an amorphous steel ribbon, or is formed by laminating silicon steel sheets.
